# FASCICULE DE BREVET EUROPEEN

(11) **EP 2 199 164 B1**
(45) Date de publication et mention de la délivrance du brevet: **22.05.2013**
(21) Numéro de dépôt: 09177659.1
(22) Date de dépôt: 01.12.2009
(51) Int. Cl.: B60T 11/236, F16J 15/32

(54) **Joint de mâitre cylindre de freinage, pour véhicule automobile.**
Dichtung für einen Hauptbremszylinder für ein Kraftfahrzeug
Seal for a brake master cylinder for a motor vehicle

(30) Priorité: 19.12.2008 FR 0807186
(43) Date de publication de la demande: 23.06.2010
(73) Titulaire: Robert Bosch GmbH, 70442 Stuttgart (DE)
(72) Inventeur: Auguste, Antony, 94350, Villier Sur Marne (FR); Bernadat, Olivier, 94170, LE PERREUX (FR); Gaffe, François, 93140, BONDY (FR); Lhuiller, Laurent, 93150, LE BLANC MESNIL (FR)

(56) Documents cités:
- EP-A- 1 616 768
- WO-A-2005/019007
- US-B1- 6 272 858

## Description

La présente invention concerne essentiellement un joint de maître cylindre de freinage, en particulier pour véhicule automobile.

Les commandes de freinage des véhicules automobiles comportent en général une pédale de frein agissant sur un maître cylindre, pour transmettre par un circuit hydraulique une pression de liquide vers des récepteurs freinant les différentes roues.

La pédale de frein agit sur un piston coulissant axialement dans un corps comportant un joint d'étanchéité comprenant une lèvre qui s'applique sur le piston, pour séparer un volume arrière contenant une réserve de liquide à pression atmosphérique, d'un volume avant comprenant une chambre mise en pression par le déplacement de ce piston.

Un maître cylindre de freinage de ce type est décrit dans le document US-B1-6272858, qui présente un joint circulaire à deux lèvres. Une lèvre interne enserre le piston en assurant une étanchéité dynamique. Quand le piston est au repos en position arrière, la lèvre interne vient dans une gorge du piston ayant une profondeur réduite et des parois latérales faiblement inclinées.

Dans cette position du piston au repos, un perçage radial formé dans le piston et débouchant dans la gorge vient se positionner en arrière de la lèvre interne du joint à lèvres, pour mettre en communication la chambre de pression et la réserve de liquide, et si nécessaire réajuster le volume du circuit hydraulique.

Le joint à lèvres est calé axialement dans un logement annulaire du corps qui entoure le piston, et comporte une lèvre externe qui appuie sur un fond cylindrique de ce logement annulaire, pour assurer une étanchéité statique entre la chambre de pression et le volume arrière.

Un inconvénient principal de ce maître cylindre est qu'au niveau de la lèvre d'étanchéité statique, des petites particules solides peuvent, suite aux mouvements du fluide lors d'une remise à niveau du circuit de pression par exemple, venir se loger sous cette lèvre et rester coincées par la lèvre qui est constamment appliquée sur le diamètre extérieur de manière statique. Les particules logées ainsi sous la lèvre, peuvent finir par provoquer des fuites, la lèvre n'étant plus régulièrement appliquée sur la surface en regard.

Un joint d'étanchéité selon la préambule de la revendication 1 est connu du document EP 1 616 768 A1.

La présente invention a notamment pour but d'éviter ces inconvénients de la technique antérieure, et d'apporter à la réalisation d'une étanchéité statique à lèvre d'un maître cylindre de freinage, une solution simple et efficace.

Elle propose à cet effet un maître cylindre d'un circuit hydraulique de freinage, en particulier pour véhicule automobile, comportant un piston coulissant axialement dans un corps et coopérant avec un joint annulaire d'étanchéité à lèvres placé dans un logement du corps, ce joint comprenant une lèvre interne d'étanchéité dynamique enserrant le piston, venant dans une gorge annulaire du piston lorsque celui-ci est dans une position arrière de repos, et une lèvre externe d'étanchéité statique venant en appui sur une paroi du logement, **caractérisé en ce que** le joint comprend une lèvre complémentaire d'étanchéité qui vient en appui sur une paroi radiale du logement de ce joint et définit avec la lèvre externe un petit volume fermé de liquide.

Un avantage essentiel du maître cylindre selon l'invention, est que par une réalisation simple et économique, on peut garder un petit volume de liquide entre les deux lèvres d'étanchéité statique, et lors d'une manoeuvre faire varier ce volume en créant un flux chassant d'éventuelles particules qui se trouveraient coincées par les lèvres.

Le maître cylindre selon l'invention peut en outre comporter une ou plusieurs des caractéristiques suivantes, qui peuvent être combinées entre elles.

Selon une autre caractéristique de l'invention, lorsque le piston quitte sa position arrière de repos, la lèvre interne ressortant de la gorge annulaire, le joint annulaire comporte des moyens pour comprimer le petit volume et chasser du liquide hors de ce volume.

Avantageusement, la lèvre externe est disposée en appui sur la paroi du logement suivant une légère inclinaison, et forme un clapet s'ouvrant en cas de surpression dans le petit volume.

Avantageusement, la lèvre complémentaire est disposée en appui sur la paroi du logement suivant une légère inclinaison, et forme un clapet s'ouvrant en cas de dépression dans le petit volume.

Selon un mode de réalisation particulier de l'invention, la lèvre externe s'étend sensiblement axialement, avec un appui sur une surface cylindrique radialement extérieure du logement, et la lèvre complémentaire s'étend sensiblement radialement, avec un appui sur une surface radiale plane arrière de ce logement.

Avantageusement, le joint annulaire comporte une lèvre axiale intermédiaire entre les lèvres externe et interne, orientée sensiblement axialement, et dont l'extrémité est en appui sur une surface avant sensiblement radiale du logement annulaire.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une demi-vue en coupe axiale d'un joint annulaire de maître cylindre selon l'invention, le piston étant dans une position arrière de repos ;
- la figure 2 est une demi-vue de ce joint annulaire, après une petite course du piston ;
- la figure 3 est une demi-vue de ce joint annulaire à lèvres, la lèvre externe se soulevant;
- la figure 4 est une demi-vue de ce joint annulaire à lèvres, la lèvre externe se refermant ;
- les figures 5 et 6 sont des demi-vues de ce joint annulaire à lèvres, des particules étant chassées hors du petit volume fermé.

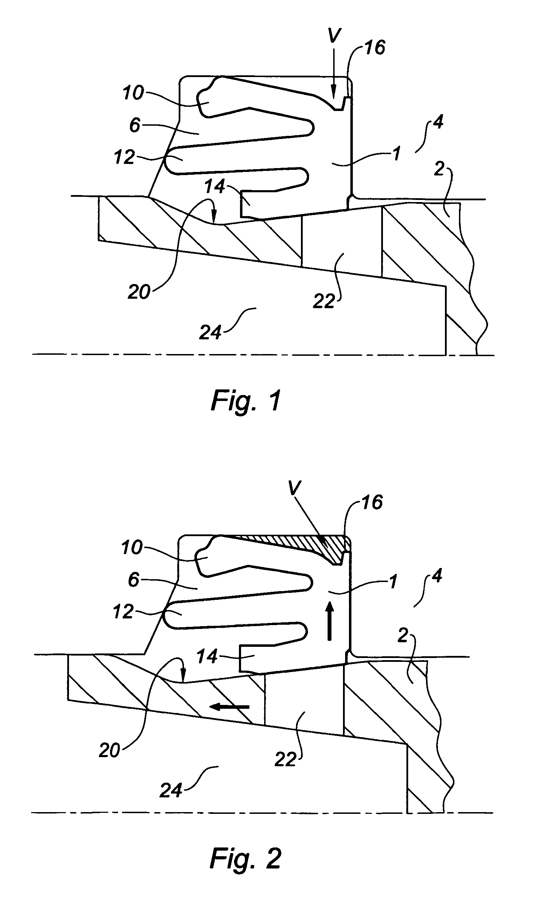

Les figures 1 à 4 représentent un joint annulaire 1 qui enserre un piston 2 coulissant axialement dans un corps 4 d'un maître cylindre de freinage.

Le joint annulaire 1 est monté dans un logement annulaire 6 du corps 4 et comporte une lèvre externe 10 dont l'extrémité d'applique radialement sur une paroi cylindrique externe de ce logement, pour assurer une étanchéité statique, et une lèvre interne 14 dont l'extrémité s'applique radialement sur la surface extérieure du piston 2, pour assurer une étanchéité dynamique lors du coulissement de ce piston.

Le joint annulaire 1 comporte une face arrière sensiblement plane, en appui sur une face radiale plane arrière du logement annulaire 6.

Le joint annulaire 1 comporte aussi une lèvre axiale 12, radialement intermédiaire entre les lèvres externe 10 et interne 14, orientée sensiblement axialement, et dont l'extrémité est en appui sur une face avant sensiblement radiale du logement annulaire 6, pour assurer un calage axial de ce joint entre les deux faces avant et arrière du logement.

Le joint annulaire 1 comporte de plus une petite lèvre radiale 16 s'étendant radialement vers l'extérieur, qui prolonge la face arrière de ce joint et vient en appui sur la face arrière du logement annulaire 6. Un petit volume V situé sous la paroi cylindrique extérieure du logement 6, est ainsi délimité entre la lèvre externe 10 et la lèvre radiale 16.

La lèvre radiale 16 agit en complément de la lèvre externe 10, comme une deuxième étanchéité placée en série pour confirmer l'étanchéité statique entre le joint annulaire 1 et le corps 4.

Lorsque le piston 2 est en position arrière de repos, la lèvre interne 14 descend dans une gorge 20 du piston 2, ayant une profondeur réduite et des parois latérales faiblement inclinées. La paroi arrière de cette gorge 20 comporte un perçage radial 22 qui débouche d'une part en arrière de cette lèvre interne 14, et d'autre part dans la chambre de pression 24 du maître cylindre.

Le perçage radial 22 met ainsi en communication lorsque le conducteur a relâché la pédale de frein, en position de repos représentée dans cette figure, la chambre de pression 24 avec un réservoir de liquide pour ajuster le niveau du circuit hydraulique.

Le fonctionnement du joint annulaire 1 suivant l'invention est illustré par les figures 2 à 4. Lorsque le piston 2 commence une course vers l'avant lors d'un freinage, la lèvre interne 14 du joint annulaire 1 glissant sur la pente arrière de la gorge 20, remonte progressivement radialement vers l'extérieur, comme représenté figure 2.

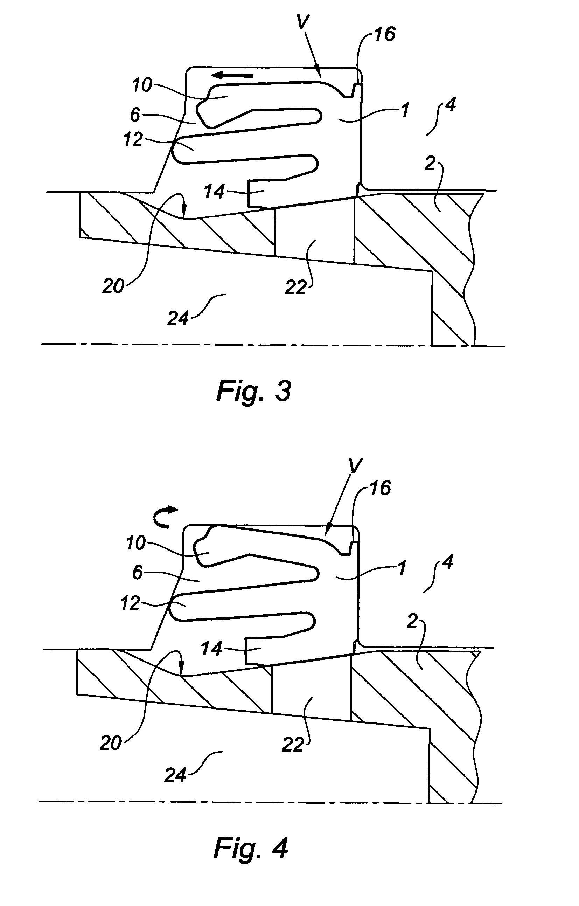

Ce mouvement de remontée provoque une compression radiale vers l'extérieur de la matière élastique du joint annulaire 1, qui comprime à son tour le petit volume V rempli de liquide. La pression du liquide dans ce volume V a pour effet, d'une part, de confirmer l'appui de la lèvre radiale 16 sur la paroi arrière du logement annulaire 6 et, d'autre part, à partir d'une certaine pression, de déplacer la lèvre externe 10 qui laisse ainsi ce volume se vider au moins en partie, comme représenté figure 3.

Une fois ce volume vidé au moins en partie, la pression intérieure ayant chuté, la lèvre externe 10 agissant comme un clapet revient en appui sur le fond du logement, comme représenté figure 4 et referme le volume V.

A la fin du freinage, la pédale revenant dans sa position de repos, la lèvre interne 14 redescend dans la gorge 20, la pression dans la matière du joint diminue et le volume V augmente à nouveau, créant une dépression interne qui tend à déplacer la lèvre radiale 16. On a alors une aspiration de liquide par cette lèvre radiale, et le volume V se remplit à nouveau.

On a créé ainsi à chaque cycle de freinage, un mouvement d'un petit volume de fluide qui est successivement chassé du volume V vers l'avant, puis aspiré en venant de l'arrière.

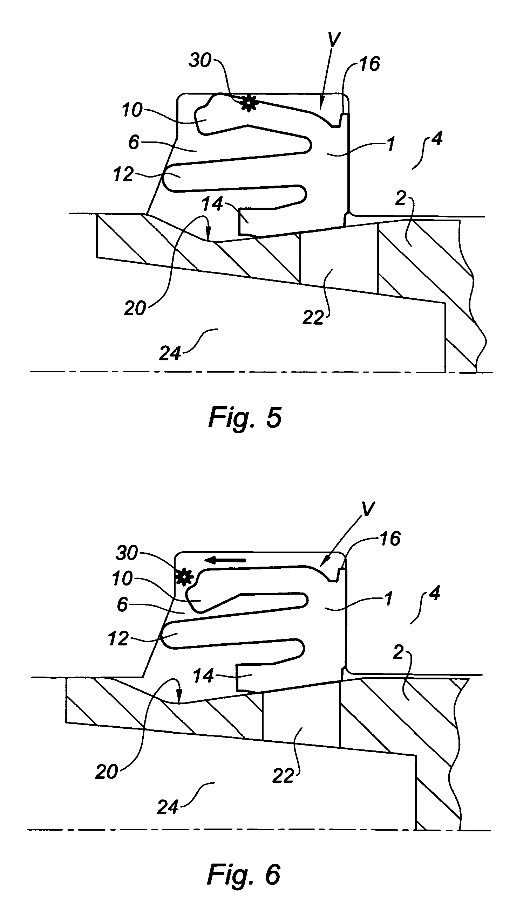

Les figures 5 et 6 illustrent l'effet de ce mouvement de fluide sur une particule 30 qui pourrait rester coincée sous la lèvre externe 10 du joint annulaire 1.

Lorsque le volume V se vide, le liquide entraîne la particule 30 dans son mouvement vers l'avant. Les zones de contact de la lèvre externe 10 avec le fond du logement peuvent ainsi être systématiquement nettoyées à chaque cycle de freinage. Il en est de même pour la lèvre radiale 16, qui sous l'effet du passage du liquide, peut aussi être nettoyée.

Pour ce qui est de la lèvre interne 14 assurant une étanchéité dynamique, le mouvement du piston 2 à chaque cycle de freinage, réalise un glissement sur cette lèvre qui favorise en permanence l'évacuation de particules.

On apporte ainsi de manière économique, de meilleures garanties pour assurer une étanchéité durable dans le temps, même avec un liquide de freinage comportant des particules en suspension.

## Revendications

1. Maître cylindre d'un circuit hydraulique de freinage, en particulier pour véhicule automobile, comportant un piston (2) coulissant axialement dans un corps (4) et coopérant avec un joint annulaire (1) d'étanchéité placé dans un logement (6) du corps (4), ce joint comprenant une lèvre interne (14) d'étanchéité dynamique enserrant le piston, venant dans une gorge annulaire (20) du piston lorsque celui-ci est dans une position arrière de repos, et une lèvre externe (10) d'étanchéité statique venant en appui sur une paroi du logement, **caractérisé en ce que** le joint comprend une lèvre complémentaire (16) d'étanchéité statique qui vient en appui sur une paroi radiale du logement de ce joint et définit avec la lèvre externe un petit volume (V) fermé de liquide.

2. Maître cylindre selon la revendication 1, **caractérisé en ce que** lorsque le piston (2) quitte sa position arrière de repos, la lèvre interne (14) ressortant de la gorge annulaire (20), le joint annulaire (1) comporte des moyens pour comprimer le petit volume (V), et chasser du liquide hors de ce volume.

3. Maître cylindre selon la revendication 2, **caractérisé en ce que** la lèvre externe (10) est disposée en appui sur la paroi du logement avec une légère inclinaison, de manière à former un clapet s'ouvrant avec une surpression dans le petit volume (V).

4. Maître cylindre selon la revendication 2 ou 3, **caractérisé en ce que** la lèvre complémentaire (16) est disposée en appui sur la paroi du logement avec une légère inclinaison et forme un clapet s'ouvrant en cas de dépression dans le petit volume (V).

5. Maître cylindre selon les revendications 3 et 4, **caractérisé en ce que** la lèvre externe (10) s'étend sensiblement axialement, avec un appui sur une surface cylindrique radialement extérieure du logement (6), et **en ce que** la lèvre complémentaire (16) s'étend sensiblement radialement, avec un appui sur une surface radiale plane arrière de ce logement.

6. Maître cylindre selon l'une quelconque des revendications précédentes, **caractérisé en ce que** le joint annulaire (1) comporte une lèvre axiale (12), radialement intermédiaire entre les lèvres externe (10) et interne (14), orientée sensiblement axialement, et dont l'extrémité est en appui sur une surface avant sensiblement radiale du logement annulaire (6).

## Patentansprüche

1. Hauptzylinder eines hydraulischen Bremskreislaufs, insbesondere für Kraftfahrzeug, der einen Kolben (2) aufweist, der axial in einem Körper (4) gleitet und mit einer ringförmigen Dichtung (1) zusammenwirkt, die in einer Aufnahme (6) des Körpers (4) platziert ist, wobei diese Dichtung eine interne Lippe (14) zum dynamischen Abdichten, die den Kolben umschließt, aufweist, die in eine ringförmige Hohlkehle (20) des Kolbens kommt, wenn sich dieser in einer hinteren Ruhestellung befindet, und eine externe Lippe (10) zum statischen Abdichten, die auf einer Wand der Aufnahme zum Aufliegen kommt, **dadurch gekennzeichnet, dass** die Dichtung eine komplementäre Lippe (16) zum statischen Abdichten aufweist, die auf einer radialen Wand der Aufnahme dieser Dichtung zur Auflage kommt und mit der externen Lippe ein kleines geschlossenes Volumen (V) Flüssigkeit bildet.

2. Hauptzylinder nach Anspruch 1, **dadurch gekennzeichnet, dass**, wenn der Kolben (2) seine hintere Ruheposition verlässt, wobei die interne Lippe (14) aus der ringförmigen Hohlkehle (20) austritt, die ringförmige Dichtung (1) Mittel aufweist, um dieses kleine Volumen (V) zu komprimieren und Flüssigkeit aus diesem Volumen auszutreiben.

3. Hauptzylinder nach Anspruch 2, **dadurch gekennzeichnet, dass** die externe Lippe (10) in Auflage auf der Wand der Aufnahme mit einer leichten Neigung derart angeordnet ist, dass eine Klappe gebildet wird, die sich mit einem Überdruck in dem kleinen Volumen (V) öffnet.

4. Hauptzylinder nach Anspruch 2 oder 3, **dadurch gekennzeichnet, dass** die ergänzende Lippe (16) in Auflage auf der Wand der Aufnahme mit einer leichten Neigung angeordnet ist und eine Klappe bildet, die sich bei Unterdruck in dem kleinen Volumen (V) öffnet.

5. Hauptzylinder nach den Ansprüchen 3 und 4, **dadurch gekennzeichnet, dass** sich die externe Lippe (10) im Wesentlichen axial erstreckt, mit einer Auflage auf einer radial äußeren zylindrischen Oberfläche der Aufnahme (6), und dass sich die komplementäre Lippe (16) im Wesentlichen radial mit einer Auflage auf einer flachen radialen hinteren Oberfläche dieser Aufnahme erstreckt.

6. Hauptzylinder nach einem der vorhergehenden Ansprüche, **dadurch gekennzeichnet, dass** die ringförmige Dichtung (1) eine axiale Lippe (12) aufweist, die radial zwischen der externen (10) und der internen (14) Lippe im Wesentlichen axial ausgerichtet ist und deren Ende auf einer vorderen im Wesentlichen radialen Oberfläche der ringförmigen Aufnahme (6) aufliegt.

## Claims

1. Master cylinder for a hydraulic braking circuit, particularly for a motor vehicle, comprising a piston (2) sliding axially in a body (4) and collaborating with an annular seal (1) placed in a housing (6) of the body (4), this seal comprising an internal dynamic sealing lip (14) surrounding the piston, fitting into an annular groove (20) of the piston when this piston is in a rear rest position, and an outer static sealing lip (10) pressing against a wall of the housing, **characterized in that** the seal comprises an additional static sealing lip (16) which presses against a radial wall of the housing of this seal and with the outer lip defines a small closed volume (V) of liquid.

2. Master cylinder according to Claim 1, **characterized in that** when the piston (2) leaves its rear rest position, the inner lip (14) leaving the annular groove (20), the annular seal (1) comprises means for compressing the small volume (V) and driving the liquid out of this volume.

3. Master cylinder according to Claim 2, **characterized in that** the outer lip (10) is positioned pressing against the wall of the housing with a slight inclination so as to form a check valve that opens in the event of a raised pressure in the small volume (V).

4. Master cylinder according to Claim 2 or 3, **characterized in that** the additional lip (16) is positioned pressing against the wall of the housing with a slight inclination and forms a check valve that opens in the event of a reduced pressure in the small volume (V).

5. Master cylinder according to Claims 3 and 4, **characterized in that** the outer lip (10) extends substantially axially, pressing against a radially exterior cylindrical surface of the housing (6), and **in that** the additional lip (16) extends substantially radially, pressing against a planar radial rear surface of this housing.

6. Master cylinder according to any one of the preceding claims, **characterized in that** the annular seal (1) comprises an axial lip (12) which is radially intermediate between the outer lip (10) and the inner lip (14) and is directed substantially axially, and the end of which presses against a substantially radial front surface of the annular housing (6).
